# FASCICULE DE BREVET EUROPEEN

(11) **EP 3 860 788 B1**
(45) Date de publication et mention de la délivrance du brevet: **17.07.2024**
(21) Numéro de dépôt: 19801952.3
(22) Date de dépôt: 03.10.2019
(51) Int. Cl.: B22F 3/105, C22C 1/04, B33Y 40/00, B33Y 70/00, B22F 1/00, B22F 3/15, B22F 3/24, B22F 10/22, B22F 10/25, B22F 10/28, B22F 10/64, B23K 9/04, B23K 9/23, B23K 9/173, B23K 26/00, B23K 26/342, B23K 103/10, C22C 21/00

(54) **PROCEDE DE FABRICATION D'UNE PIECE EN ALLIAGE D'ALUMINIUM ET UNE POUDRE D'ALLIAGE D'ALUMINIUM**
VERFAHREN ZUR HERSTELLUNG EINES ALUMINIUMLEGIERUNGSTEILS UND EIN ALUMINIUMLEGIERUNGSPULVER
PROCESS FOR MANUFACTURING AN ALUMINUM ALLOY PART AND AN ALUMINIUM ALLOY POWDER

(30) Priorité: 05.10.2018 FR 1871133
(43) Date de publication de la demande: 11.08.2021
(73) Titulaire: C-TEC CONSTELLIUM TECHNOLOGY CENTER, 38341 Voreppe (FR)
(72) Inventeur: CHEHAB, Bechir, 38500 Voiron (FR)
(74) Mandataire: Constellium - Propriété Industrielle
(86) Numéro de dépôt international: PCT/FR2019/052347
(87) Numéro de publication internationale: WO 2020/070452

(56) Documents cités:
- WO-A1-2016/209652
- CN-A- 108 330 344

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, y compris des pièces métalliques.

Le terme « fabrication additive » est défini, selon la norme française XP E67-001, comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015/006447. L'application de couches successives est généralement réalisée par application d'un matériau dit d'apport, puis fusion ou frittage du matériau d'apport à l'aide d'une source d'énergie de type faisceau laser, faisceau d'électrons, torche plasma ou arc électrique. Quelle que soit la modalité de fabrication additive appliquée, l'épaisseur de chaque couche ajoutée est de l'ordre de quelques dizaines ou centaines de microns.

Un moyen de fabrication additive est la fusion ou le frittage d'un matériau d'apport prenant la forme d'une poudre. Il peut s'agir de fusion ou de frittage par un faisceau d'énergie.

On connaît notamment les techniques de frittage sélectif par laser (selective laser sintering, SLS ou direct métal laser sintering, DMLS), dans lequel une couche de poudre de métal ou d'alliage métallique est appliquée sur la pièce à fabriquer et est frittée sélectivement selon le modèle numérique avec de l'énergie thermique à partir d'un faisceau laser. Un autre type de procédé de formation de métal comprend la fusion sélective par laser (selective laser melting, SLM) ou la fusion par faisceau d'électrons (electron beam melting, EBM), dans lequel l'énergie thermique fournie par un laser ou un faisceau d'électrons dirigé est utilisée pour fondre sélectivement (au lieu de fritter) la poudre métallique afin qu'elle fusionne à mesure qu'elle refroidit et se solidifie.

On connaît également le dépôt par fusion laser (laser melting déposition, LMD) dans lequel la poudre est projetée et fondue par un faisceau laser de façon simultanée.

La demande de brevet WO2016/209652 décrit un procédé pour fabriquer un aluminium à haute résistance mécanique comprenant : la préparation d'une poudre d'aluminium atomisée ayant une ou plusieurs tailles de poudre approximative désirée et une morphologie approximative ; le frittage de la poudre pour former un produit par fabrication additive ; la mise en solution ; la trempe ; et le revenu de l'aluminium fabriqué de façon additive.

La demande de brevet EP2796229 divulgue un procédé de formation d'un alliage métallique d'aluminium renforcé par dispersion comprenant les étapes consistant à : obtenir, sous une forme de poudre, une composition d'alliage d'aluminium qui est susceptible d'acquérir une microstructure renforcée par dispersion ; diriger un faisceau laser à basse densité d'énergie sur une partie de la poudre ayant la composition de l'alliage ; retirer le faisceau laser de la partie de la composition d'alliage en poudre ; et refroidir la partie de la composition d'alliage en poudre à une vitesse supérieure ou égale à environ 10⁶ °C par seconde, pour former ainsi l'alliage métallique d'aluminium renforcé par dispersion. La méthode est particulièrement adaptée pour un alliage ayant une composition selon la formule suivante : Al_{comp}FeₐSi_{b}X_{c}, dans laquelle X représente au moins un élément choisi dans le groupe constitué par Mn, V, Cr, Mo, W, Nb et Ta; « a » va de 2,0 à 7,5 % en atomes ; « b » va de 0,5 à 3,0 % en atomes ; « c » va de 0,05 à 3,5 % en atomes ; et le complément est de l'aluminium et des impuretés accidentelles, à condition que le rapport [Fe+Si]/Si se situe dans la gamme d'environ 2,0:1 à 5,0:1.

La demande de brevet US2017/0211168 divulgue un procédé de fabrication d'un alliage léger et résistant, performant à haute température, comprenant de l'aluminium, du silicium, et du fer et/ou du nickel.

La demande de brevet EP3026135 décrit un alliage de moulage comprenant 87 à 99 parts en poids d'aluminium et de silicium, 0,25 à 0,4 parts en poids de cuivre et 0,15 à 0,35 parts en poids d'une combinaison d'au moins deux éléments parmi Mg, Ni et Ti. Cet alliage de moulage est adapté pour être pulvérisé par un gaz inerte pour former une poudre, la poudre étant utilisée pour former un objet par fabrication additive par laser, l'objet subissant ensuite un traitement de revenu.

La publication « Characterization of AI-Fe-V-Si heat-resistant aluminum alloy components fabricated by sélective laser melting », Journal of Material Research, Vol. 30, No. 10, May 28, 2015, décrit la fabrication par SLM de composants résistants à la chaleur de composition, en % en poids, AI-8.5Fe-1.3V-1.7Si.

La publication « Microstructure and mechanical properties of AI-Fe-V-Si aluminum alloy produced by electron beam melting », Materials Science&Engineering A659(2016)207-214, décrit des pièces du même alliage que dans l'article précédent obtenues par EBM.

Il existe une demande grandissante d'alliages d'aluminium à haute résistance pour l'application SLM. Les alliages 4xxx (principalement Al10SiMg, Al7SiMg et Al12Si) sont les alliages d'aluminium les plus matures pour l'application SLM. Ces alliages offrent une très bonne aptitude au procédé SLM mais souffrent de propriétés mécaniques limitées.

Le Scalmalloy^{®} (DE102007018123A1) développé par APWorks offre (avec un traitement thermique post-fabrication de 4h à 325°C) de bonnes propriétés mécaniques à température ambiante. Cependant cette solution souffre d'un coût élevé sous forme de poudre lié à sa teneur élevée en scandium (^{~} 0,7% Sc) et à la nécessité d'un processus d'atomisation spécifique. Cette solution souffre également de mauvaises propriétés mécaniques à haute température, par exemple supérieure à 150°C.

L'Addalloy^{™} développé par NanoAl (WO201800935A1) est un alliage Al Mg Zr. Cet alliage souffre de propriétés mécaniques limitées avec un pic de dureté d'environ 130 HV.

Les propriétés mécaniques des pièces d'aluminium obtenues par fabrication additive dépendent de l'alliage formant le métal d'apport, et plus précisément de sa composition, des paramètres du procédé de fabrication additive ainsi que des traitements thermiques appliqués.

On connaît par exemple un alliage de type 7xxx décrit dans CN 108 330 344 A, ayant la composition suivante, en pourcentages massiques: 0,1 - 6,0 % Si ; 0 - 6,0 % Fe ; 1,2 - 6,0 % Cu ; 0,1 - 6,3 % Mn ; 2,1 - 6,9 % Mg ; 0,18-0,68 % Cr ; 5,1 - 10,1 % Zn ; 0- 6,2 % Ti ; 0 - 6,0 % Zr ; 0 - 1 % Sc ; reste aluminium.

Les inventeurs ont déterminé une composition d'alliage qui, utilisée dans un procédé de fabrication additive, permet d'obtenir des pièces ayant des caractéristiques remarquables. En particulier, les pièces obtenues selon la présente invention ont des caractéristiques améliorées par rapport à l'art antérieur (notamment un alliage 8009), en particulier en termes de dureté à chaud (par exemple après 1h à 400°C).

### EXPOSE DE L'INVENTION

Un premier objet de l'invention est un procédé de fabrication d'une pièce comportant une formation de couches métalliques solides successives, superposées les unes aux autres, chaque couche décrivant un motif défini à partir d'un modèle numérique, chaque couche étant formée par le dépôt d'un métal, dit métal d'apport, le métal d'apport étant soumis à un apport d'énergie de façon à entrer en fusion et à constituer, en se solidifiant, ladite couche, dans lequel le métal d'apport prend la forme d'une poudre, dont l'exposition à un faisceau énergétique résulte en une fusion suivie d'une solidification de façon à former une couche solide, le procédé étant caractérisé en ce que le métal d'apport est un alliage d'aluminium comprenant au moins les éléments d'alliage suivant:
- Fe, selon une fraction massique de 1 à 3,7 %, de préférence de 1 à 3,6 % ;
- Zr et/ou Hf et/ou Er et/ou Sc et/ou Ti, de préférence Zr, selon une fraction massique de 0,5 à 4 %, de préférence de 1 à 4 %, plus préférentiellement de 1,5 à 3,5 %, encore plus préférentiellement de 1,5 à 2 % chacun, et selon une fraction massique inférieure ou égale à 4 %, de préférence inférieure ou égale à 3 %, plus préférentiellement inférieure ou égale à 2 % au total ;
- Si, selon une fraction massique de 0 à 4 %, de préférence de 0,5 à 3 % ;
- V, selon une fraction massique de 0 à 4 %, de préférence de 0,5 à 3 %,
- absence de Cu;
- Mg, selon une fraction massique inférieure à 0,05%.

Il est à noter que l'alliage selon la présente invention peut comprendre également :
- des impuretés selon une fraction massique inférieure à 0,05 % chacune (soit 500 ppm) et inférieure à 0,15 % au total ;
- le reste étant de l'aluminium.

De préférence, l'alliage selon la présente invention comprend une fraction massique d'au moins 85 %, plus préférentiellement d'au moins 90 % d'aluminium.

La fusion de la poudre peut être partielle ou totale. De préférence, de 50 à 100 % de la poudre exposée entre en fusion, plus préférentiellement de 80 à 100 %.

Optionnellement, l'alliage peut également comprendre au moins un élément choisi parmi : W, Nb, Ta, Y, Yb, Nd, Mn, Ce, Co, La, Ni, Mo et/ou du mischmétal, selon une fraction massique inférieure ou égale à 5 %, de préférence inférieure ou égale à 3 % chacun, et inférieure ou égale à 15 %, de préférence inférieure ou égale à 12 %, encore plus préférentiellement inférieure ou égale à 5 % au total. Cependant, dans un mode de réalisation, on évite l'addition de Sc, la fraction massique préférée de Sc étant alors inférieure à 0,05 %, et de préférence inférieure à 0,01 %.

Ces éléments peuvent conduire à la formation de dispersoïdes ou de phases intermétalliques fines permettant d'augmenter la dureté du matériau obtenu.

De manière connue de l'homme du métier, la composition du mischmétal est généralement d'environ 45 à 50 % de cérium, 25 % de lanthane, 15 à 20 % de néodyme et 5 % de praséodyme. De préférence, l'alliage d'aluminium ne comprend pas Ce et/ou mischmétal et/ou Co et/ou La et/ou Mn et/ou Cr.

Optionnellement, l'alliage peut également comprendre au moins un élément choisi parmi : Sr, Ba, Sb, Bi, Ca, P, B, In et/ou Sn, selon une fraction massique inférieure ou égale à 1 %, de préférence inférieure ou égale à 0,1 %, encore plus préférentiellement inférieure ou égale à 700 ppm chacun, et inférieure ou égale à 2 %, de préférence inférieure ou égale à 1 % au total. Cependant, dans un mode de réalisation, on évite l'addition de Bi, la fraction massique préférée de Bi étant alors inférieure à 0,05 %, et de préférence inférieure à 0,01 %.

Optionnellement, l'alliage peut également comprendre au moins un élément choisi parmi : Ag selon une fraction massique de 0,06 à 1 %, Li selon une fraction massique de 0,06 à 1 %, et/ou Zn selon une fraction massique de 0,06 à 6 %, de préférence de 0,06 à 0,5 %. Ces éléments peuvent agir sur la résistance du matériau par précipitation durcissante ou par leur effet sur les propriétés de la solution solide. Selon une variante de la présente invention, il n'y a pas d'addition volontaire de Zn, notamment en raison du fait qu'il s'évapore pendant le procédé SLM.

Selon une variante de la présente invention, l'alliage n'est pas un alliage de type AA7xxx.

Optionnellement, l'alliage peut également comprendre au moins un élément pour affiner les grains et éviter une microstructure colonnaire grossière, par exemple AlTiC ou AITiB2 (par exemple sous forme AT5B ou AT3B), selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

Selon un mode de réalisation, le procédé peut comporter, suite à la formation des couches :
- une mise en solution suivie d'une trempe et d'un revenu, ou
- un traitement thermique typiquement à une température d'au moins 100°C et d'au plus 400°C
- et/ou une compression isostatique à chaud (CIC).

Le traitement thermique peut notamment permettre un détensionnement des contraintes résiduelles et/ou une précipitation supplémentaire de phases durcissantes.

Le traitement CIC peut notamment permettre d'améliorer les propriétés d'allongement et les propriétés en fatigue. La compression isostatique à chaud peut être réalisée avant, après ou à la place du traitement thermique.

Avantageusement, la compression isostatique à chaud est réalisée à une température de 250°C à 550°C et de préférence de 300°C à 450°C, à une pression de 500 à 3000 bars et pendant une durée de 0,5 à 10 heures.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution. Cependant le procédé selon l'invention est avantageux car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines.

Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

Un deuxième objet de l'invention est une pièce métallique, obtenue par un procédé selon le premier objet de l'invention.

Un troisième objet de l'invention est une poudre comprenant, de préférence consistant en, un alliage d'aluminium comprenant au moins les éléments d'alliage suivant :
- Fe, selon une fraction massique de 1 à 3,7 %, de préférence de 1 à 3,6 % ;
- Zr et/ou Hf et/ou Er et/ou Sc et/ou Ti, de préférence Zr, selon une fraction massique de 0,5 à 4 %, de préférence de 1 à 4 %, plus préférentiellement de 1,5 à 3,5 %, encore plus préférentiellement de 1,5 à 2 % chacun, et selon une fraction massique inférieure ou égale à 4 %, de préférence inférieure ou égale à 3 %, plus préférentiellement inférieure ou égale à 2 % au total ;
- Si, selon une fraction massique de 0 à 4 %, de préférence de 0,5 à 3 % ;
- V, selon une fraction massique de 0 à 4 %, de préférence de 0,5 à 3 % ;
- absence de Cu ;
- Mg, selon une fraction massique inférieure à 0,05%.

Il est à noter que l'alliage d'aluminium de la poudre selon la présente invention peut comprendre également :
- des impuretés selon une fraction massique inférieure à 0,05 % chacune (soit 500 ppm) et inférieure à 0,15 % au total ;
- le reste étant de l'aluminium.

De préférence, l'alliage de la poudre selon la présente invention comprend une fraction massique d'au moins 85 %, plus préférentiellement d'au moins 90 % d'aluminium.

L'alliage d'aluminium de la poudre selon la présente invention peut également comprendre :
- optionnellement au moins un élément choisi parmi : W, Nb, Ta, Y, Yb, Nd, Mn, Ce, Co, La, Ni, Mo et/ou du mischmétal, selon une fraction massique inférieure ou égale à 5 %, de préférence inférieure ou égale à 3 % chacun, et inférieure ou égale à 15 %, de préférence inférieure ou égale à 12 %, encore plus préférentiellement inférieure ou égale à 5 % au total. Cependant, dans un mode de réalisation, on évite l'addition de Sc, la fraction massique préférée de Sc étant alors inférieure à 0,05 %, et de préférence inférieure à 0,01 %. ; et/ou
- optionnellement au moins un élément choisi parmi : Sr, Ba, Sb, Bi, Ca, P, B, In, et/ou Sn, selon une fraction massique inférieure ou égale à 1 %, de préférence inférieure ou égale à 0,1 %, encore plus préférentiellement inférieure ou égale à 700 ppm chacun, et inférieure ou égale à 2 %, de préférence inférieure ou égale à 1 % au total. Cependant, dans un mode de réalisation, on évite l'addition de Bi, la fraction massique préférée de Bi étant alors inférieure à 0,05 %, et de préférence inférieure à 0,01 %. ; et/ou
- optionnellement, au moins un élément choisi parmi : Ag selon une fraction massique de 0,06 à 1 %, Li selon une fraction massique de 0,06 à 1 %, et/ou Zn selon une fraction massique de 0,06 à 6 %, de préférence de 0,06 à 0,5 %. Selon une variante de la présente invention, il n'y a pas d'addition volontaire de Zn, notamment en raison du fait qu'il s'évapore pendant le procédé SLM. Selon une variante de la présente invention, l'alliage n'est pas un alliage de type AA7xxx. ; et/ou
- optionnellement au moins un élément choisi pour affiner les grains et éviter une microstructure colonnaire grossière, par exemple AlTiC ou AITiB2 (par exemple sous forme AT5B ou AT3B), selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

De préférence, l'alliage d'aluminium de la poudre selon la présente invention ne comprend pas Ce et/ou mischmétal et/ou Co et/ou La et/ou Mn et/ou Cr.

D'autres avantages et caractéristiques ressortiront plus clairement de la description qui va suivre et des exemples non limitatifs, et représentés sur les figures listées ci-dessous.

### FIGURES

[Fig. 1] La Figure 1 est un schéma illustrant un procédé de fabrication additive de type SLM, ou EBM.
[Fig. 2] La Figure 2 montre une micrographie d'une coupe transversale d'un échantillon Al10Si0.3Mg après balayage de surface avec un laser, coupé et poli avec deux empreintes de dureté Knoop dans la couche refondue.
[Fig. 3] La Figure 3 est un schéma de l'éprouvette cylindrique de type TOR4 utilisée selon les exemples.

### DESCRIPTION DETAILLEE DE L'INVENTION

Dans la description, sauf indication contraire :
- la désignation des alliages d'aluminium est conforme à la nomenclature établie par The Aluminum Association ;
- les teneurs en éléments chimiques sont désignées en % et représentent des fractions massiques.

Par impureté, on entend des éléments chimiques présents dans l'alliage de façon non intentionnelle.

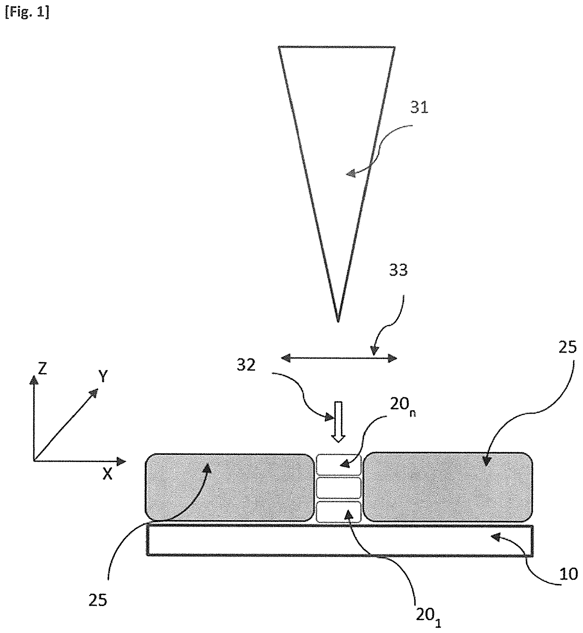

La figure 1 décrit de façon générale un mode de réalisation, dans lequel le procédé de fabrication additive selon l'invention est mis en oeuvre. Selon ce procédé, le matériau d'apport 25 se présente sous la forme d'une poudre en alliage selon l'invention. Une source d'énergie, par exemple une source laser ou une source d'électrons 31, émet un faisceau d'énergie par exemple un faisceau laser ou un faisceau d'électrons 32. La source d'énergie est couplée au matériau d'apport par un système optique ou de lentilles électromagnétiques 33, le mouvement du faisceau pouvant ainsi être déterminé en fonction d'un modèle numérique M. Le faisceau d'énergie 32 suit un mouvement selon le plan longitudinal XY, décrivant un motif dépendant du modèle numérique M. La poudre 25 est déposée sur un support 10. L'interaction du faisceau d'énergie 32 avec la poudre 25 engendre une fusion sélective de cette dernière, suivie d'une solidification, résultant en la formation d'une couche 20₁...20ₙ. Lorsqu'une couche a été formée, elle est recouverte de poudre 25 du métal d'apport et une autre couche est formée, superposée à la couche préalablement réalisée. L'épaisseur de la poudre formant une couche peut par exemple être de 10 à 100 µm. Ce mode de fabrication additive est typiquement connu sous le nom de fusion sélective par laser (selective laser melting, SLM) quand le faisceau d'énergie est un faisceau laser, le procédé étant dans ce cas avantageusement exécuté à pression atmosphérique, et sous le nom de fusion par faisceau d'électrons (electron beam melting EBM) quand le faisceau d'énergie est un faisceau d'électrons, le procédé étant dans ce cas avantageusement exécuté à pression réduite, typiquement inférieure à 0,01 bar et de préférence inférieure à 0,1 mbar.

Dans un autre mode de réalisation, la couche est obtenue par frittage sélectif par laser (selective laser sintering, SLS ou direct métal laser sintering, DMLS), la couche de poudre d'alliage selon l'invention étant frittée sélectivement selon le modèle numérique choisi avec de l'énergie thermique fournie par un faisceau laser.

Dans encore un autre mode de réalisation non décrit par la figure 1, la poudre est projetée et fondue de façon simultanée par un faisceau généralement laser. Ce procédé est connu sous le nom de dépôt par fusion laser (laser melting déposition).

D'autres procédés peuvent être utilisés, notamment ceux connus sous les noms de dépôt direct d'énergie (Direct Energy Déposition, DED), dépôt direct de métal (Direct Metal Deposition, DMD), dépôt direct par laser (Direct Laser Déposition, DLD), technologie de dépôt par laser (Laser Déposition Technology, LDT), dépôt de métal par laser (Laser Metal Deposition, LMD), ingénierie de formes nettes par laser (Laser Engineering Net Shaping, LENS), technologie de plaquage par laser (Laser Cladding Technology, LCT), ou technologie de fabrication de formes libres par laser (Laser Freeform Manufacturing Technology, LFMT).

Dans un mode de réalisation, le procédé selon l'invention est utilisé pour la réalisation d'une pièce hybride comprenant une partie obtenue par des procédés classiques de laminage et/ou de filage et/ou de moulage et/ou de forgeage optionnellement suivi d'usinage et une partie solidaire obtenue par fabrication additive. Ce mode de réalisation peut également convenir pour la réparation de pièces obtenues par les procédés classiques.

On peut également, dans un mode de réalisation de l'invention, utiliser le procédé selon l'invention pour la réparation de pièces obtenues par fabrication additive.

A l'issue de la formation des couches successives on obtient une pièce brute ou pièce à l'état brut de fabrication.

Les pièces métalliques obtenues par le procédé selon l'invention sont particulièrement avantageuses car elles ont une dureté à l'état brut de fabrication inférieure à celle d'une référence en 8009, et en même temps une dureté après un traitement thermique du même ordre de grandeur ou supérieure à celle d'une référence en 8009. La dureté plus faible à l'état brut de fabrication des alliages selon la présente invention par rapport à un alliage 8009 est considérée comme avantageuse pour l'aptitude au procédé SLM, en induisant un niveau de contraintes résiduelles plus faible lors de la fabrication SLM et ainsi une plus faible sensibilité à la fissuration à chaud. La dureté plus élevée après un traitement thermique (par exemple 1h à 400°C) des alliages selon la présente invention par rapport à un alliage 8009 apporte une meilleure stabilité thermique. Le traitement thermique d'une heure à 400°C pourrait par exemple être une étape de compression isostatique à chaud (CIC) post-fabrication SLM.

La dureté Knoop HK0,05 (avec une charge de 0,5 g, selon la norme ASTM E384 de juin 2017) à l'état brut de fabrication des pièces métalliques obtenues selon la présente invention est de préférence de 120 à 260 HK, plus préférentiellement de 150 à 250 HK. De manière préférée, la dureté Knoop HK0,05 des pièces métalliques obtenues selon la présente invention, après un traitement thermique d'au moins 100°C et d'au plus 550°C et/ou une compression isostatique à chaud, par exemple après 1h à 400°C, est de 100 à 220 HK, plus préférentiellement de 110 à 210 HK. Le protocole de mesure de la dureté Knoop HK0,05 est décrit dans les exemples ci-après.

La poudre selon la présente invention peut présenter au moins l'une des caractéristiques suivantes :
- taille moyenne de particules de 5 à 100 µm, de préférence de 5 à 25 µm, ou de 20 à 60 µm.

Les valeurs données signifient qu'au moins 80 % des particules ont une taille moyenne dans la gamme spécifiée ;
- forme sphérique. La sphéricité d'une poudre peut par exemple être déterminée en utilisant un morphogranulomètre ;
- bonne coulabilité. La coulabilité d'une poudre peut par exemple être déterminée selon la norme ASTM B213 ou la norme ISO 4490 :2018. Selon la norme ISO 4490 :2018, le temps d'écoulement est de préférence inférieur à 50 s ;
- faible porosité, de préférence de 0 à 5 %, plus préférentiellement de 0 à 2 %, encore plus préférentiellement de 0 à 1 % en volume. La porosité peut notamment être déterminée par microscopie à balayage électronique ou par pycnométrie à l'hélium (voir la norme ASTM B923) ;
- absence ou faible quantité (moins de 10 %, de préférence moins de 5 % en volume) de petites particules (1 à 20 % de la taille moyenne de la poudre), dites satellites, qui collent aux particules plus grosses.

La poudre selon la présente invention peut être obtenue par des procédés classiques d'atomisation à partir d'un alliage selon l'invention sous forme liquide ou solide ou, alternativement, la poudre peut être obtenue par mélange de poudres primaires avant l'exposition au faisceau énergétique, les différentes compositions des poudres primaires ayant une composition moyenne correspondant à la composition de l'alliage selon l'invention.

On peut également ajouter des particules infusibles, non solubles, par exemple des oxydes ou des particules TiB₂ ou des particules de carbone, dans le bain avant l'atomisation de la poudre et/ou lors du dépôt de la poudre et/ou lors du mélange des poudres primaires. Ces particules peuvent servir à affiner la microstructure. Elles peuvent également servir à durcir l'alliage si elles sont de taille nanométrique. Ces particules peuvent être présentes selon une fraction volumique inférieure à 30 %, de préférence inférieure à 20 %, plus préférentiellement inférieure à 10 %.

La poudre selon la présente invention peut être obtenue par exemple par atomisation par jet de gaz, atomisation plasma, atomisation par jet d'eau, atomisation par ultrasons, atomisation par centrifugation, électrolyse et sphéroïdisation, ou broyage et sphéroïdisation.

De préférence, la poudre selon la présente invention est obtenue par atomisation par jet de gaz. Le procédé d'atomisation par jet de gaz commence avec la coulée d'un métal fondu à travers une buse. Le métal fondu est ensuite atteint par des jets de gaz neutres, tels que de l'azote ou de l'argon, et atomisé en très petites gouttelettes qui se refroidissent et se solidifient en tombant à l'intérieur d'une tour d'atomisation. Les poudres sont ensuite recueillies dans une canette. Le procédé d'atomisation par jet de gaz présente l'avantage de produire une poudre ayant une forme sphérique, contrairement à l'atomisation par jet d'eau qui produit une poudre ayant une forme irrégulière. Un autre avantage de l'atomisation par jet de gaz est une bonne densité de poudre, notamment grâce à la forme sphérique et à la distribution de taille de particules. Encore un autre avantage de ce procédé est une bonne reproductibilité de la distribution de taille de particules.

Après sa fabrication, la poudre selon la présente invention peut être étuvée, notamment afin de réduire son humidité. La poudre peut également être conditionnée et stockée entre sa fabrication et son utilisation.

La poudre selon la présente invention peut notamment être utilisée dans les applications suivantes :
- frittage sélectif par laser (Selective Laser Sintering ou SLS en anglais) ;
- frittage direct du métal par laser (Direct Metal Laser Sintering ou DMLS en anglais) ;
- frittage sélectif par chauffage (Selective Heat Sintering ou SHS en anglais) ;
- fusion sélective par laser (Selective Laser Melting ou SLM en anglais) ;
- fusion par faisceau d'électrons (Electron Beam Melting ou EBM en anglais) ;
- dépôt par fusion laser (Laser Melting Deposition en anglais) ;
- dépôt direct par apport d'énergie (Direct Energy Déposition ou DED en anglais) ;
- dépôt direct de métal (Direct Metal Déposition ou DMD en anglais) ;
- dépôt direct par laser (Direct Laser Deposition ou DLD en anglais) ;
- technologie de dépôt par Laser (Laser Déposition Technology ou LDT en anglais) ;
- ingénierie de formes nettes par laser (Laser Engineering Net Shaping ou LENS en anglais) ;
- technologie de plaquage par laser (Laser Cladding Technology ou LCT en anglais) ;
- technologie de fabrication de formes libres par laser (Laser Freeform Manufacturing Technology ou LFMT en anglais) ;
- dépôt par fusion laser (Laser Metal Deposition ou LMD en anglais) ;
- pulvérisation à froid (Cold Spray Consolidation ou CSC en anglais) ;
- fabrication additive par friction (Additive Friction Stir ou AFS en anglais) ;
- frittage par étincelle au plasma ou frittage flash (Field Assisted Sintering Technology, FAST ou spark plasma sintering en anglais) ; ou
- soudage par friction rotative (Inertia Rotary Friction Welding ou IRFW.

L'invention sera décrite plus en détails dans l'exemple ci-après.

L'invention n'est pas limitée aux modes de réalisation décrits dans la description ci-avant ou dans les exemples ci-après, et peut varier largement dans le cadre de l'invention telle que définie par les revendications jointes à la présente description.

### EXEMPLES

### Exemple 1

Trois alliages selon la présente invention, appelés Innov1, Innov2 et Innov3, et un alliage 8009 de l'art antérieur ont été coulés dans un moule en cuivre en utilisant une machine Induthem VC 650V pour obtenir des lingots de 130 mm de hauteur, de 95 mm de largeur et de 5 mm d'épaisseur. La composition des alliages est donnée en pourcentage de fraction massique dans le tableau 1 suivant.

**[Tableau 1]**

| **Alliages** | **Si** | **Fe** | **V** | **Zr** |
|---|---|---|---|---|
| Référence (8009) | 1,8 | 8,65 | 1,3 | - |
| Innov1 | 1,7 | 3,5 | 1,3 | 1 |
| Innov2 | 1,7 | 3,5 | 1,3 | 2 |
| Innov3 | 1,7 | 3,5 | 1,3 | 3 |

Les alliages tels que décrits dans le tableau 1 ci-avant ont été testés par une méthode de prototypage rapide. Des échantillons ont été usinés pour le balayage de la surface avec un laser, sous forme de plaquettes de dimensions 60 × 22 × 3 mm, à partir des lingots obtenus ci-avant. Les plaquettes ont été placées dans une machine SLM et des balayages de la surface ont été effectués avec un laser en suivant la même stratégie de balayage et des conditions de procédé représentatives de celles utilisées pour le procédé SLM. Il a en effet été constaté qu'il était possible de cette manière d'évaluer l'aptitude des alliages au procédé SLM et notamment la qualité de surface, la sensibilité à la fissuration à chaud, la dureté à l'état brut et la dureté après traitement thermique.

Sous le faisceau laser, le métal fond dans un bain de 10 à 350 µm d'épaisseur. Après le passage du laser, le métal refroidit rapidement comme dans le procédé SLM. Après le balayage laser, une fine couche en surface de 10 à 350 µm d'épaisseur a été fondue puis solidifiée. Les propriétés du métal dans cette couche sont proches des propriétés du métal au coeur d'une pièce fabriquée par SLM, car les paramètres de balayage sont judicieusement choisis. Le balayage laser de la surface des différents échantillons a été effectué à l'aide d'une machine de fusion laser sélective ProX300 de marque 3DSystems. La source laser avait une puissance de 250 W, l'écart vecteur était de 60 µm, la vitesse de balayage était de 300 mm/s et le diamètre du faisceau était de 80 µm.

### Mesure de dureté Knoop

La dureté est une propriété importante pour les alliages. En effet, si la dureté dans la couche refondue par balayage de la surface avec un laser est élevée, une pièce fabriquée avec le même alliage aura potentiellement une limite de rupture élevée.

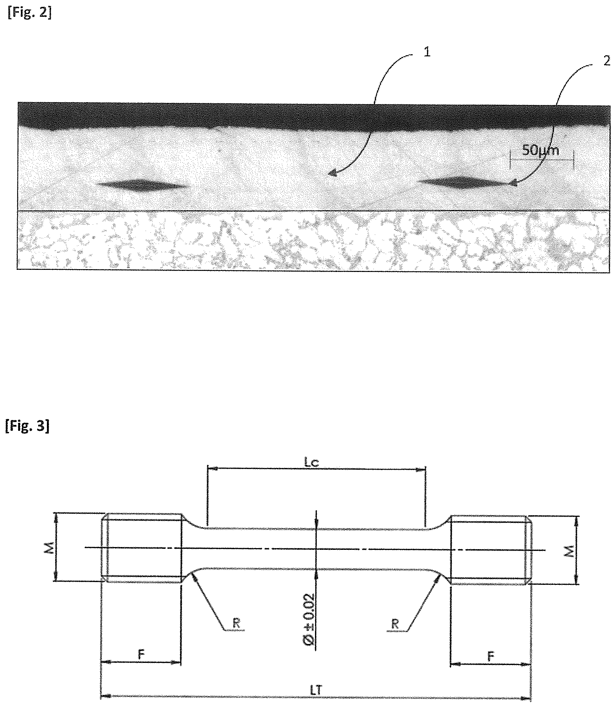

Pour évaluer la dureté de la couche refondue, les plaquettes obtenues ci-avant ont été coupées dans le plan perpendiculaire à la direction des passes du laser et ont ensuite été polis. Après polissage, des mesures de dureté ont été effectuées dans la couche refondue. La mesure de dureté a été effectuée avec un appareil de modèle Durascan de Struers. La méthode de dureté Knoop HK0,05 avec la grande diagonale de l'empreinte placée parallèlement au plan de la couche refondue a été choisie pour garder suffisamment de distance entre l'empreinte et le bord de l'échantillon. 15 empreintes ont été positionnées à mi-épaisseur de la couche refondue. La Figure 2 montre un exemple de la mesure de dureté. La référence 1 correspond à la couche refondue et la référence 2 correspond à une empreinte de dureté Knoop.

La dureté a été mesurée selon l'échelle Knoop avec une charge de 50 g (HK0,05) après traitement laser (à l'état brut) et après un traitement thermique supplémentaire à 400°C pendant des durées variables, permettant notamment d'évaluer l'aptitude de l'alliage au durcissement lors d'un traitement thermique et l'effet d'un éventuel traitement CIC sur les propriétés mécaniques.

Les valeurs de dureté Knoop HK0,05 à l'état brut et après différentes durées à 400°C sont données dans le tableau 2 ci-après (HK0,05).

**[Tableau 2]**

| **Alliage** | **Etat brut** | **Après 1h à 400°C** | **Après 4h à 400°C** | **Après 10h à 400°C** |
|---|---|---|---|---|
| Référence (8009) | 316 | 145 | 159 | 155 |
| Innov1 | 172 | 146 | 153 | 141 |
| Innov2 | 187 | 172 | 171 | 150 |
| Innov3 | 199 | 179 | 188 | 186 |

Les alliages selon la présente invention (Innov1 et Innov2) ont montré une dureté Knoop HK0,05 à l'état brut inférieure à celle de l'alliage 8009 de référence, mais, après un traitement thermique à 400°C, du même ordre de grandeur ou supérieure à celle de l'alliage 8009 de référence.

Le tableau 2 ci-avant montre bien la meilleure stabilité thermique des alliages selon la présente invention par rapport à l'alliage 8009 de référence. En effet, la dureté de l'alliage 8009 a chuté fortement dès le début du traitement thermique, puis a atteint un plateau. Au contraire, la dureté des alliages selon la présente invention a diminué progressivement.

### Exemple 2

Un alliage selon la présente invention ayant la composition telle que présentée dans le tableau 3 ci-après, en pourcentages massiques a été préparé.

**[Tableau 3]**

| **Alliage** | **Fe** | **Si** | **Zr** | **V** |
|---|---|---|---|---|
| Innov4 | 3.5 | 1.7 | 3 | 1.3 |

5 kg de poudre de l'alliage ont été atomisés avec succès à l'aide d'un atomiseur VIGA (Vacuum Inert Gas Atomization). La poudre a été utilisée avec succès dans une machine de fusion sélective par laser de modèle FormUp 350 pour la réalisation d'ébauches d'éprouvettes de traction. Les essais ont été réalisés avec les paramètres suivants : épaisseur de couche : 60 µm, puissance du laser : 370 W, écart vecteur : 0,11 à 0,13 mm, vitesse du laser : 1000 à 1400 mm/s. Le plateau de construction a été chauffé à une température de 200°C (sans être lié par la théorie, il semblerait qu'un chauffage du plateau de 50°C à 300°C soit bénéfique pour la réduction des contraintes résiduelles et de la fissuration d'origine thermique sur les pièces produites).

Les ébauches étaient cylindriques avec une hauteur de 45 mm et un diamètre de 11 mm pour les essais de traction dans la direction de fabrication (direction Z). Les ébauches ont subi un traitement thermique de détente de 2h à 300°C. Certaines ébauches ont été gardées à l'état brut de détente et d'autres ébauches ont subi un traitement supplémentaire de 1h à 400°C (recuit de durcissement).

Des éprouvettes cylindriques de type TOR4 ayant les caractéristiques décrites ci-après en mm (voir Tableau 4 et Figure 3) ont été usinées à partir des ébauches décrites ci-avant.

**[Tableau 4]**

| **Type** | **Ø** | **M** | **LT** | **R** | **Lc** | **F** |
|---|---|---|---|---|---|---|
| TOR 4 | 4 | 8 | 45 | 3 | 22 | 8,7 |

Dans la Figure 3 et le Tableau 4, Ø représente le diamètre de la partie centrale de l'éprouvette, M la largeur des deux extrémités de l'éprouvette, LT la longueur totale de l'éprouvette, R le rayon de courbure entre la partie centrale et les extrémités de l'éprouvette, Le la longueur de la partie centrale de l'éprouvette et F la longueur des deux extrémités de l'éprouvette.

Des essais de traction ont été réalisés à température ambiante et à chaud (200°C et 250°C) en suivant les normes NF EN ISO 6892-1 (2009-10) et l'ASTM E8-E8M-13a (2013). Les résultats obtenus sont présentés dans le Tableau 5 ci-après.

**[Tableau 5]**

| **Direction** | **Traitement thermique** | **Température d'essai** | **Rp0.2 (MPa)** | **Rm (MPa)** | **A%** |
|---|---|---|---|---|---|
| Z | Etat brut de détente (2h à 300°C) | 25°C | 372 | 410 | 6.7 |
| Z | Recuit de durcissement (1h à 400°C) | 25°C | 432 | 467 | 4.8 |
| Z | Recuit de durcissement (1h à 400°C) | 200°C | 230 | 249 | 4.7 |
| Z | Recuit de durcissement (1h à 400°C) | 250°C | 203 | 222 | 3.7 |

D'après le Tableau 5 ci-avant, le recuit de durcissement a conduit à une augmentation significative de la résistance mécanique par rapport à l'état brut, associé à une baisse de l'allongement (si l'on compare les deux premières lignes du Tableau 5). L'alliage selon la présente invention permet donc de s'affranchir d'un traitement thermique conventionnel de type mise en solution / trempe. L'alliage selon la présente invention présente également des bonnes performances mécaniques à chaud : Rp0.2 de 230 MPa et 203 MPa à respectivement 200°C et 250°C.

Le traitement thermique (recuit de durcissement) de 1h à 400°C réalisé avant les essais de traction permet de simuler l'effet d'un éventuel traitement CIC à 400°C ou d'un vieillissement longue durée à une température de service entre 100 et 300°C.

En conclusion l'alliage selon la présente invention combine de bonnes performances à température ambiante et à haute température, ainsi qu'une bonne stabilité thermique.

## Revendications

1. Procédé de fabrication d'une pièce comportant une formation de couches métalliques solides successives (20₁...20ₙ), superposées les unes aux autres, chaque couche décrivant un motif défini à partir d'un modèle numérique (M), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide (20₁...20ₙ),
le procédé étant **caractérisé en ce que** le métal d'apport (25) est un alliage d'aluminium comprenant au moins les éléments d'alliage suivant :
- Fe, selon une fraction massique de 1 à 3,7 %, de préférence de 1 à 3,6 % ;
- Zr et/ou Hf et/ou Er et/ou Sc et/ou Ti, selon une fraction massique de 0,5 à 4 %, de préférence de 1 à 4 %, plus préférentiellement de 1,5 à 3,5 %, encore plus préférentiellement de 1,5 à 2 % chacun, et selon une fraction massique inférieure ou égale à 4 %, de préférence inférieure ou égale à 3 %, plus préférentiellement inférieure ou égale à 2 % au total ;
- Si, selon une fraction massique de 0 à 4 %, de préférence de 0,5 à 3 % ;
- V, selon une fraction massique de 0 à 4 %, de préférence de 0,5 à 3 % ;
- absence de Cu ;
- Mg, selon une fraction massique inférieure à 0,05 % ;
- optionnellement au moins un élément choisi parmi : W, Nb, Ta, Y, Yb, Nd, Mn, Ce, Co, La, Ni, Mo et/ou du mischmétal, selon une fraction massique inférieure ou égale à 5 % chacun, et inférieure ou égale à 15 % au total ;
- optionnellement au moins un élément choisi parmi : Sr, Ba, Sb, Bi, Ca, P, B, In et/ou Sn, selon une fraction massique inférieure ou égale à 1 % chacun, et inférieure ou égale à 2 % au total ;
- optionnellement au moins un élément choisi parmi : Ag selon une fraction massique de 0,06 à 1 %, Li selon une fraction massique de 0,06 à 1 %, et/ou Zn selon une fraction massique de 0,06 à 6 % ;
- des impuretés selon une fraction massique inférieure à 0,05 % chacune (soit 500 ppm) et inférieure à 0,15 % au total ;
- le reste étant de l'aluminium.

2. Procédé selon la revendication 1, dans lequel la fraction massique dudit au moins un élément choisi parmi : W, Nb, Ta, Y, Yb, Nd, Mn, Ce, Co, La, Ni, Mo et/ou du mischmétal, est inférieure ou égale à 3 % chacun, et de préférence inférieure ou égale à 12 %, encore plus préférentiellement inférieure ou égale à 5 % au total.

3. Procédé selon l'une quelconque des revendications précédentes, dans lequel l'alliage d'aluminium ne comprend pas Ce et/ou mischmétal et/ou Co et/ou La et/ou Mn et/ou Cr.

4. Procédé selon l'une quelconque des revendications précédentes, dans lequel la fraction massique dudit au moins un élément choisi parmi : Sr, Ba, Sb, Bi, Ca, P, B, In et/ou Sn, est inférieure ou égale à 0,1 %, préférentiellement inférieure ou égale à 700 ppm chacun, et de préférence inférieure ou égale à 1 % au total.

5. Procédé selon l'une quelconque des revendications précédentes, dans lequel l'alliage d'aluminium comprend également au moins un élément pour affiner les grains, par exemple AITiB2, selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

6. Procédé selon l'une quelconque des revendications précédentes, comportant, suite à la formation des couches (20₁...20ₙ),
- une mise en solution suivie d'une trempe et d'un revenu, ou
- un traitement thermique typiquement à une température d'au moins 100°C et d'au plus 400°C,
- et/ou une compression isostatique à chaud.

7. Pièce métallique obtenue par un procédé objet de l'une quelconque des revendications précédentes.

8. Poudre comprenant, de préférence consistant en, un alliage d'aluminium comprenant :
- Fe, selon une fraction massique de 1 à 3,7 %, de préférence de 1 à 3,6 % ;
- Zr et/ou Hf et/ou Er et/ou Sc et/ou Ti, selon une fraction massique de 0,5 à 4 %, de préférence de 1 à 4 %, plus préférentiellement de 1,5 à 3,5 %, encore plus préférentiellement de 1,5 à 2 % chacun, et selon une fraction massique inférieure ou égale à 4 %, de préférence inférieure ou égale à 3 %, plus préférentiellement inférieure ou égale à 2 % au total ;
- Si, selon une fraction massique de 0 à 4 %, de préférence de 0,5 à 3 % ;
- V, selon une fraction massique de 0 à 4 %, de préférence de 0,5 à 3 % ;
- absence de Cu ;
- Mg, selon une fraction massique inférieure à 0,05 % ;
- optionnellement au moins un élément choisi parmi : W, Nb, Ta, Y, Yb, Nd, Mn, Ce, Co, La, Ni, Mo et/ou du mischmétal, selon une fraction massique inférieure ou égale à 5 % chacun, et inférieure ou égale à 15 % au total ;
- optionnellement au moins un élément choisi parmi : Sr, Ba, Sb, Bi, Ca, P, B, In et/ou Sn, selon une fraction massique inférieure ou égale à 1 % chacun, et inférieure ou égale à 2 % au total ;
- optionnellement au moins un élément choisi parmi : Ag selon une fraction massique de 0,06 à 1 %, Li selon une fraction massique de 0,06 à 1 %, et/ou Zn selon une fraction massique de 0,06 à 6 % ;
- des impuretés selon une fraction massique inférieure à 0,05 % chacune (soit 500 ppm) et inférieure à 0,15 % au total ;
- le reste étant de l'aluminium.

## Patentansprüche

1. Verfahren zur Herstellung eines Teils, das eine Bildung aufeinanderfolgender fester Metallschichten (20₁...20ₙ) enthält, die übereinander gelegt sind, wobei jede Schicht ein Muster beschreibt, das ausgehend von einem numerischen Modell (M) definiert ist, wobei jede Schicht durch die Abscheidung eines Metalls (25), Füllmetall genannt, gebildet wird, wobei das Füllmetall einer Energiezufuhr unterzogen wird, um zu schmelzen und sich verfestigend die Schicht zu formen, wobei das Füllmetall die Form eines Pulvers (25) annimmt, dessen Aussetzung an einen Energiestrahl (32) zu einer Verschmelzung gefolgt von einer Erstarrung führt, wodurch eine feste Schicht (20₁...20ₙ) gebildet wird,
wobei das Verfahren **dadurch gekennzeichnet ist, dass** das Füllmetall (25) eine Aluminiumlegierung ist, die mindestens die folgenden Legierungselemente umfasst:
- Fe, mit einem Massenanteil von 1 bis 3,7 %, vorzugsweise 1 bis 3,6 %;
- Zr und/oder Hf und/oder Er und/oder Sc und/oder Ti, mit einem Massenanteil jeweils von 0,5 bis 4 %, vorzugsweise von 1 bis 4 %, bevorzugter von 1,5 bis 3,5 %, noch bevorzugter von 1,5 bis 2 %, und mit einem Massenanteil von weniger als oder gleich 4 %, vorzugsweise weniger als oder gleich 3 %, bevorzugter weniger als oder gleich 2 % insgesamt;
- Si, mit einem Massenanteil von 0 bis 4 %, vorzugsweise 0,5 bis 3 %;
- V, mit einem Massenanteil von 0 bis 4 %, vorzugsweise 0,5 bis 3 %;
- Nichtvorhandensein von Cu;
- Mg, mit einem Massenanteil von weniger als 0,05 %;
- optional, mindestens ein Element ausgewählt aus: W, Nb, Ta, Y, Yb, Nd, Mn, Ce, Co, La, Ni, Mo und/oder Mischmetall, mit einem Massenanteil von jeweils weniger als oder gleich 5 %, und weniger als oder gleich 15 % insgesamt;
- optional, mindestens ein Element ausgewählt aus: Sr, Ba, Sb, Bi, Ca, P, B, In und/oder Sn, mit einem Massenanteil von jeweils weniger als oder gleich 1 %, und weniger als oder gleich 2 % insgesamt;
- optional, mindestens ein Element ausgewählt aus: Ag mit einem Massenanteil von 0,06 bis 1 %, Li mit einem Massenanteil von 0,06 bis 1 % und/oder Zn mit einem Massenanteil von 0,06 bis 6 %;
- Verunreinigungen mit einem Massenanteil von jeweils weniger als 0,05 % (d. h. 500 ppm), und weniger als 0,15 % insgesamt;
- der Rest ist Aluminium.

2. Verfahren nach Anspruch 1, wobei der Massenanteil des mindestens einen Elements, ausgewählt aus: W, Nb, Ta, Y, Yb, Nd, Mn, Ce, Co, La, Ni, Mo und/oder Mischmetall, jeweils weniger als oder gleich 3 % ist, und vorzugsweise weniger als oder gleich 12 %, noch bevorzugter weniger als oder gleich 5 % insgesamt.

3. Verfahren nach einem der vorhergehenden Ansprüche, wobei die Aluminiumlegierung kein Ce und/oder Mischmetall und/oder Co und/oder La und/oder Mn und/oder Cr umfasst.

4. Verfahren nach einem der vorhergehenden Ansprüche, wobei der Massenanteil des mindestens einen Elements, ausgewählt aus: Sr, Ba, Sb, Bi, Ca, P, B, In und/oder Sn, jeweils weniger als oder gleich 0,1% ist, präferentiell weniger als oder gleich 700 ppm, und vorzugsweise weniger als oder gleich 1 % insgesamt.

5. Verfahren nach einem der vorhergehenden Ansprüche, wobei die Aluminiumlegierung auch mindestens ein Kornfeinungsmittel, zum Beispiel AlTiB2, umfasst, in einer Menge von jeweils weniger als oder gleich 50 kg/Tonne, vorzugsweise weniger als oder gleich 20 kg/Tonne, noch bevorzugter weniger als oder gleich 12 kg/Tonne, und weniger als oder gleich 50 kg/Tonne, vorzugsweise weniger als oder gleich 20 kg/Tonne insgesamt.

6. Verfahren nach einem der vorhergehenden Ansprüche, enthaltend, nach der Bildung der Schichten (20₁...20ₙ),
- ein Aufbereiten in Lösung, gefolgt von einer Abschreckung und Anlassen, oder
- eine Wärmebehandlung, typischerweise bei einer Temperatur von mindestens 100 °C und höchstens 400 °C,
- und/oder eine heißisostatische Kompression.

7. Metallteil, das durch ein Verfahren nach einem der vorhergehenden Ansprüche erhalten wurde.

8. Pulver, umfassend, vorzugsweise bestehend aus einer Aluminiumlegierung, umfassend:
- Fe, mit einem Massenanteil von 1 bis 3,7 %, vorzugsweise 1 bis 3,6 %;
- Zr und/oder Hf und/oder Er und/oder Sc und/oder Ti, mit einem Massenanteil jeweils von 0,5 bis 4 %, vorzugsweise 1 bis 4 %, bevorzugter 1,5 bis 3,5 %, noch bevorzugter 1,5 bis 2 %, und mit einem Massenanteil von weniger als oder gleich 4 %, vorzugsweise weniger als oder gleich 3 %, bevorzugter weniger als oder gleich 2 % insgesamt;
- Si, mit einem Massenanteil von 0 bis 4 %, vorzugsweise 0,5 bis 3 %;
- V, mit einem Massenanteil von 0 bis 4 %, vorzugsweise 0,5 bis 3 %;
- Nichtvorhandensein von Cu;
- Mg, mit einem Massenanteil von weniger als 0,05 %;
- optional, mindestens ein Element ausgewählt aus: W, Nb, Ta, Y, Yb, Nd, Mn, Ce, Co, La, Ni, Mo und/oder Mischmetall, mit einem Massenanteil von jeweils weniger als oder gleich 5 %, und weniger als oder gleich 15 % insgesamt;
- optional, mindestens ein Element ausgewählt aus: Sr, Ba, Sb, Bi, Ca, P, B, In und/oder Sn, mit einem Massenanteil von jeweils weniger als oder gleich 1 %, und weniger als oder gleich 2 % insgesamt;
- optional, mindestens ein Element ausgewählt aus: Ag mit einem Massenanteil von 0,06 bis 1 %, Li mit einem Massenanteil von 0,06 bis 1 % und/oder Zn mit einem Massenanteil von 0,06 bis 6 %;
- Verunreinigungen mit einem Massenanteil von jeweils weniger als 0,05 % (d. h. 500 ppm), und weniger als 0,15 % insgesamt;
- der Rest ist Aluminium.

## Claims

1. Process for manufacturing a part including a formation of successive solid metal layers (20₁...20ₙ), which are superimposed on each other, each layer describing a pattern defined using a digital model (*M*), each layer being formed by depositing a metal (25), referred to as filler metal, the filler metal being subjected to a supply of energy so as to become molten and to constitute, upon solidifying, said layer, wherein the filler metal takes the form of a powder (25), the exposure of which to an energy beam (32) results in a melting followed by a solidification, so as to form a solid layer (20₁...20ₙ),
the process being **characterized in that** the filler metal (25) is an aluminum alloy comprising at least the following alloy elements:
- Fe, according to a mass fraction from 1 to 3.7%, preferably from 1 to 3.6%;
- Zr and/or Hf and/or Er and/or Sc and/or Ti, according to a mass fraction from 0.5 to 4%, preferably from 1 to 4%, more preferably from 1.5 to 3.5%, even more preferably from 1.5 to 2% each, and according to a mass fraction less than or equal to 4%, preferably less than or equal to 3%, more preferably less than or equal to 2% in total;
- Si, according to a mass fraction from 0 to 4%, preferably from 0.5 to 3%;
- V, according to a mass fraction from 0 to 4%, preferably from 0.5 to 3%,
- absence of Cu;
- Mg, according to a mass fraction less than 0.05%;
- optionally at least on element selected from W, Nb, Ta, Y, Yb, Nd, Mn, Ce, Co, La, Ni, Mo and/or mischmetal, according to a mass fraction less than or equal to 5% each, and less than or equal to 15% in total;
- optionally at least one element selected from: Sr, Ba, Sb, Bi, Ca, P, B, In and/or Sn, according to a mass fraction less than or equal to 1% each, and less than or equal to 2% in total;
- optionally at least one element selected from: Ag according to a mass fraction from 0.06 to 1%, Li according to a mass fraction from 0.06 to 1%, and/or Zn according to a mass fraction from 0.06 to 6%;
- impurities according to a mass fraction less than 0.05% each (i.e. 500 ppm) and less than 0.15% in total;
- rest aluminium.

2. Process according to claim 1, wherein the the mass fraction of said at least one element selected from: W, Nb, Ta, Y, Yb, Nd, Mn, Ce, Co, La, Ni, Mo and/or mischmetal, is less than or equal to 3% each, and preferably less than or equal to 12%, even more preferably less than or equal to 5% in total.

3. Process according to any one of the preceding claims, wherein the aluminum alloy comprises Ce and/or mischmetal and/or Co and/or La and/or Mn and/or Cr.

4. Process according to any one of the preceding claims, wherein the mass fraction of said at least one element selected from: Sr, Ba, Sb, Bi, Ca, P, B, In and/or Sn, is less than or equal to 0.1%, preferably less than or equal to 700 ppm each, and preferably less than or equal to 1% in total.

5. Process according to any one of the preceding claims, wherein the aluminum alloy also comprises at least one element to refine the grains, for example AlTiB2, according to a quantity less than or equal to 50 kg/ton, preferably less than or equal to 20 kg/ton, even more preferably less than or equal to 12 kg/ton each, and less than or equal to 50 kg/ton, preferably less than or equal to 20 kg/ton in total.

6. Method according to any one of the preceding claims, including, following the formation of the layers (20₁...20ₙ),
- a solution heat treatment followed by a quenching and an aging, or
- a thermal treatment typically at a temperature of at least 100°C and at most 400°C,
- and/or a hot isostatic compression (HIC).

7. Metal part obtained by a process according to any one of the preceding claims.

8. Powder comprising, preferably consisting of, an aluminum alloy comprising:
- Fe, according to a mass fraction from 1 to 3.7%, preferably from 1 to 3.6%;
- Zr and/or Hf and/or Er and/or Sc and/or Ti, according to a mass fraction from 0.5 to 4%, preferably from 1 to 4%, more preferably from 1.5 to 3.5%, even more preferably from 1.5 to 2% each, and according to a mass fraction less than or equal to 4%, preferably less than or equal to 3%, more preferably less than or equal to 2% in total;
- Si, according to a mass fraction from 0 to 4%, preferably from 0.5 to 3%;
- V, according to a mass fraction from 0 to 4%, preferably from 0.5 to 3%;
- absence of Cu;
- Mg, according to a mass fraction less than 0.05%;
- optionally at least on element selected from W, Nb, Ta, Y, Yb, Nd, Mn, Ce, Co, La, Ni, Mo and/or mischmetal, according to a mass fraction less than or equal to 5% each, and less than or equal to 15% in total;
- optionally at least one element selected from: Sr, Ba, Sb, Bi, Ca, P, B, In and/or Sn, according to a mass fraction less than or equal to 1% each, and less than or equal to 2% in total;
- optionally at least one element selected from: Ag according to a mass fraction from 0.06 to 1%, Li according to a mass fraction from 0.06 to 1%, and/or Zn according to a mass fraction from 0.06 to 6%;
- impurities according to a mass fraction less than 0.05% each (i.e. 500 ppm) and less than 0.15% in total;
- rest aluminium.
